# EUROPEAN PATENT APPLICATION

(11) **EP 4 685 642 A1**
(43) Date of publication of application: **28.01.2026**
(21) Application number: 25188440.9
(22) Date of filing: 09.07.2025
(51) Int. Cl.: G06F 9/48

(54) **SYSTEM AND METHOD FOR PARALLELIZED LIVE MIGRATION OF VIRTUAL MACHINES THAT USE ACCELERATORS**

(30) Priority: 22.07.2024 US 202463674128 P; 31.10.2024 US 202418933365
(71) Applicant: VMware LLC, Palo Alto, CA 94304 (US)
(72) Inventor: McClure, Matthew, Irvine, CA, 92618 (US); Zhao, Yanlei, Irvine, CA, 92618 (US); Jiang, Zexing, Irvine, CA, 92618 (US); Ramanathan, Arunachalam, Irvine, CA, 92618 (US); Zou, Yixin, Irvine, CA, 92618 (US)
(74) Representative: Grünecker Patent- und Rechtsanwälte PartG mbB

(57) **Abstract**

A source host computer including a central processing unit (CPU), an accelerator, and memory, is configured to migrate a virtual machine (VM) that uses the accelerator to a destination host computer, by performing the steps of: requesting a driver of the accelerator to save first state information associated with the VM in a first migration buffer of the memory that is accessible to both the CPU and the accelerator, wherein the accelerator then performs a direct memory access (DMA) operation to save the first state information in the first migration buffer; extracting, using the CPU, the first state information from the first migration buffer; and transmitting the extracted first state information to the destination host computer.

## Description

### Cross-Reference to Related Application

This application claims priority to U.S. Provisional Patent Application No. 63/674,128, filed July 22, 2024, the entire contents of which are incorporated herein by reference.

### Background

In a virtualized computer system, virtual machines (VMs) may execute on physical host computers, referred to herein simply as "hosts." A VM is a software emulation of a host including its own guest operating system (OS) that may support one or more applications. VMs share the hardware resources of the hosts on which they execute, including the processing, memory, storage, and networking resources. Virtualization software on hosts, also referred to as "hypervisors," support the execution of VMs and perform functionalities such as migrating VMs between hosts, e.g., for load balancing between the hosts. "Migrating" a VM is a process for moving the VM between physical hosts, including transferring information such as the VM's files, settings, and state information. Furthermore, such migrations may be performed "live," i.e., while the VMs are running. For such live migrations, there is a desire to limit the impact on the performance of the VMs, ideally creating no noticeable impact from the perspective of end users of applications running on the VMs.

There are many high performance computing (HPC) applications today that require significant processing power such as artificial intelligence (AI) and big data analytics applications. To support HPC applications, hosts typically include accelerators. As used herein, accelerators are specialized hardware designed for performing tasks such as training and executing artificial neural networks (ANNs) more efficiently than general-purpose central processing units (CPUs). Examples of accelerators include graphics processing units (GPUs), tensor processing units (TPUs), neural processing units (NPUs), and field-programmable gate arrays (FPGAs). In a virtualized computer system, VMs may share accelerators such as physical GPUs to execute HPC applications thereon. For example, the VMs may share GPUs by using virtual GPUs (vGPUs), which are provisioned from a physical GPU by a hypervisor.

An accelerator includes state information describing its current status or condition at a specific point in time with respect to tasks being performed, e.g., for a VM. For example, while training an ANN, the state information may include values for weights that have been recently updated. As another example, while rendering an image of a desktop of a virtual desktop infrastructure, the state information may include information about a displayed window being moved. For example, the state information of a vGPU may be stored in random access memory (RAM) of a GPU and in a frame buffer of the GPU. When migrating a VM, there is a desire to migrate such state information for the VM to avoid disrupting its tasks. However, when such state information is large (e.g., hundreds of gigabytes in size), there is a need for an efficient way to migrate the state information, especially for a live migration for which added latency in migrating the VM may create a noticeable performance drop in an application.

### Summary

One or more embodiments provide a source host including a CPU, an accelerator, and memory, wherein the CPU executes instructions stored in the memory to migrate a VM that uses the accelerator from the source host to a destination host. By executing such instructions, the source host performs the steps of: requesting a driver of the accelerator to save first state information associated with the VM in a first migration buffer of the memory that is accessible to both the CPU and the accelerator, wherein the accelerator then performs a direct memory access (DMA) operation to save the first state information in the first migration buffer; extracting, using the CPU, the first state information from the first migration buffer; and transmitting the extracted first state information to the destination host.

Further embodiments include a method comprising the above steps and a non-transitory computer-readable storage medium comprising instructions that cause a source host to carry out the above steps.

### Brief Description of the Drawings

Figure 1 is a block diagram of a virtualized computer system in which embodiments may be implemented.
Figure 2 is a block diagram illustrating an example of migrating a VM in the virtualization computer system from a source host to a destination host.
Figure 3A is a timeline diagram illustrating an example of transmitting state information of a vGPU from a source host to a destination host, according to embodiments.
Figure 3B is a timeline diagram illustrating an example of restoring state information for a vGPU at a destination host, according to embodiments.
Figure 4 is a flow diagram of a method that may be performed by a source host to transmit state information of a vGPU to a destination host, according to some embodiments.
Figure 5 is a flow diagram of a method that may be performed by a destination host to restore state information for a vGPU into a GPU of the destination host, according to some embodiments.
Figure 6 is a flow diagram of a method that may be performed by a source host to perform a live migration of a VM to a destination host, including transmitting state information of a vGPU thereto, according to some embodiments.
Figure 7 is a flow diagram of a method that may be performed by a destination host to perform a live migration of a VM from a source host, including restoring state information for a vGPU into a GPU of the destination host, according to some embodiments.

### Detailed Description

Techniques are described for efficiently migrating a VM between hosts, including migrating state information of an accelerator of the VM. The techniques will be discussed primarily with respect to a GPU of the VM but it should be understood that such techniques also apply to other accelerators such as TPUs, NPUs, and FPGAs. Accordingly, the state information will be described as being state information of a vGPU and will also be referred to herein as "vGPU state information" or simply as "state information." However, it will be understood that such state information also refers to that of any of the above accelerators.

At both a source host and a destination host of a migration, techniques include reserving portions of memory for migrating the state information of the vGPU. At both the source host and the destination host, memory pages of this portion of memory are shared between a CPU and a GPU. During a migration, the GPUs of the source and destination hosts directly access those memory pages using direct memory access (DMA) operations. As used herein, a DMA operation is an operation performed by a hardware device such as an accelerator to access memory of a host independently of the host's CPU.

At the source host, the GPU performs DMA operations to store vGPU state information in the shared memory pages of the source host. The CPU then extracts the state information from those shared memory pages and transmits the state information to the destination host. At the destination host, the CPU stores the transmitted state information in the shared memory pages of the destination host. The GPU then performs DMA operations to restore the state information from the shared memory pages into the GPU. The GPUs performing the above DMA operations reduces the load on the CPUs, which are less efficient than the GPUs at copying and processing large amounts of data. Furthermore, the GPUs work in parallel with the CPUs to further reduce the time needed for migrating VMs, the CPUs being able to perform other migration-related operations as the GPUs perform the DMA operations.

In the case of live VM migrations, the above steps of the CPUs and GPUs may be performed at various stages of the migration. During a "pre-copying phase" of the migration, memory pages of the VM may be transmitted from the source host to the destination host while the VM is still executing at the source host. Because the VM is still executing, the VM updates the data at some of the memory pages for which data was already transmitted, thus making the data transmitted stale. The source host may retransmit such updated memory pages to the destination host in multiple iterations of the pre-copying phase.

At a certain point, the source host may end the pre-copying phase of the migration. Then, during a "stop-and-copy" phase, the source host may "quiesce" the VM. As used herein, "quiescing" a VM means halting (pausing) the execution of the VM so that state information thereof (including vGPU state information) stops changing. The source host may then transmit any remaining memory pages that have been modified to the destination host, and the VM may be "resumed" at the destination host with its memory from the source host intact. Because the VM is not executing at the source host once it is quiesced, there is a desire to minimize the duration of the stop-and-copy phase to avoid a noticeable impact on an application's performance.

According to embodiments, during a live migration, the CPU and GPU of a source host may transmit and retransmit vGPU state information as discussed above during iterations of the pre-copying phase. In response, the CPU and GPU of the destination host may receive and restore the state information during the pre-copying phase. Accordingly, during the stop-and-copy phase, there may be a minimal amount of vGPU state information remaining to be transmitted from the source host to the destination host and restored at the destination host. This dramatically decreases the duration of the stop-and-copy phase.

Additionally, according to embodiments, vGPU state information may be transmitted from the source host to the destination across a high-speed network connection. Hosts may maximize the bandwidth usage of such network connection by using multi-threading to more efficiently transmit the vGPU state information. Considering the size of the vGPU state information (e.g., hundreds of gigabytes), this significantly reduces the latency of migrating the state information. These and further aspects of the invention are discussed below with respect to the drawings.

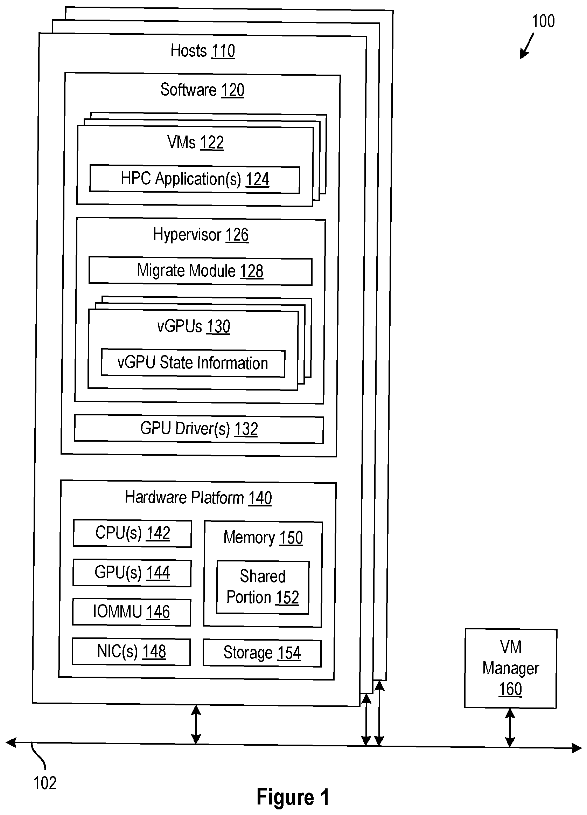

Figure 1 is a block diagram of a virtualized computer system 100 in which embodiments may be implemented. Virtualized computer system 100 includes hosts 110 and a VM manager 160. Each of hosts 110 is constructed on a hardware platform 140 such as an x86 architecture platform. Hardware platform 140 includes components of a computer, such as one or more CPUs 142, one or more accelerators such as GPUs 144, an input-output memory management unit (IOMMU) 146, one or more network interface controllers (NICs) 148, memory 150 such as RAM, and local storage 154 such as one or more magnetic drives or solid-state drives (SSDs).

CPU(s) 142 are main processors of hardware platform 140 configured to execute instructions such as executable instructions that perform one or more operations described herein, which may be stored in memory 150. GPU(s) 144 are configured to execute processing-intensive tasks for one or more HPC applications 124 such as tasks for training and executing ANNs. Hosts 110 may also include other accelerators, as discussed above. NICs 148 enable hosts 110 to communicate with each other and with other devices over a network 102 such as a local area network (LAN). According to some embodiments, network 102 supports high-speed network traffic (e.g., with a bandwidth of 100 gigabits per second). Hosts 110 may maximize the usage of network 102 by using multithreading. Local storage 154 of hosts 110 may optionally be aggregated and provisioned as a virtual storage area network (vSAN).

CPU(s) 142 support "paging" of memory 150. Paging provides a virtual address space that is divided into pages, each page being an individually addressable unit of memory. According to embodiments, memory 150 includes a shared portion 152 that is accessible to both CPU(s) 142 and GPU(s) 144. To make such portion directly accessible to GPU(s) 144, IOMMU 146 manages addresses of memory pages of memory 150.

IOMMU 146 enables DMA operations involving shared portion 152 by using translation tables (not shown) to translate addresses specified by GPU(s) 144, into addresses of shared portion 152. According to some embodiments, IOMMU 146 also makes shared portion 152 directly accessible to NIC(s) 148. Similar to GPU(s) 144, IOMMU 146 may enable DMA operations by NIC(s) 148 by using translation tables (not shown) to translate addresses specified by NIC(s) 148 into addresses of shared portion 152. IOMMU 146 is a hardware component that may be integrated directly with CPU(s) 142 or may be integrated with a motherboard (not shown) of hardware platform 140.

Hardware platform 140 of each of hosts 110 supports software 120. Software 120 includes a hypervisor 126, which is a software layer or component that supports the execution of multiple VMs 122. One example of hypervisor 126 is a VMware ESX^{®} hypervisor, available from VMware LLC. VMs 122 each include one or more HPC applications 124 such as AI applications. Software 120 also includes one or more GPU drivers 132. GPU driver(s) 132 are computer programs that execute on CPU(s) 142 to provide software interfaces for GPU(s) 144. Drivers for other types of accelerators may also be included in software 120 for providing software interfaces therefor.

Hypervisor 126 includes a migrate module 128, which is a software component that manages migration of VMs. Hypervisor 126 also manages a virtual hardware platform (not shown) for each of VMs 122. Such virtual hardware platforms include emulated hardware such as vGPUs 130 and virtual CPUs (vCPUs) (not shown). Each of vGPUs 130 includes vGPU state information, which may be stored, e.g., in RAM and frame buffers (not shown) of GPU(s) 144.

VM manager 160 may logically group hosts 110 into "clusters" to perform cluster-level tasks such as provisioning and managing VMs 122 and migrating VMs 122 from one of hosts 110 to another. For example, VM manager 160 may communicate with hosts 110 via a management network (not shown) provisioned from network 102. VM manager 160 may be, e.g., a physical server computer or one of VMs 122. One example of VM manager 160 is VMware vCenter Server,^{®} available from VMware LLC.

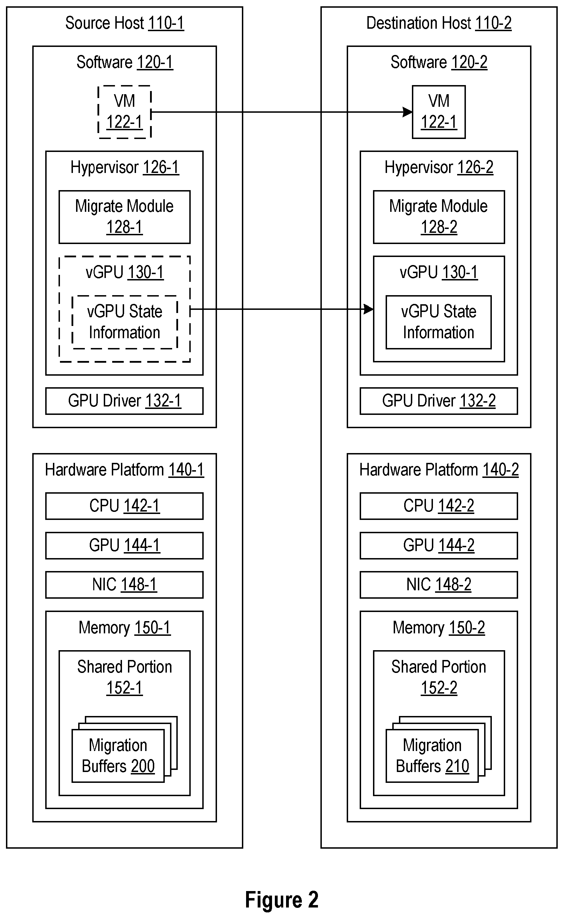

Figure 2 is a block diagram illustrating an example of migrating a VM 122-1 in virtualization computer system 100 from a source host 110-1 to a destination host 110-2. As used herein, a "source host" is a host from which a VM is migrated, and a "destination host" is a host to which the VM is migrated. As illustrated in Figure 2, source host 110-1 includes a hardware platform 140-1 supporting software 120-1, and destination host 110-2 includes a hardware platform 140-2 supporting software 120-2. Hardware platforms 140-1 and 140-2 include CPUs 142-1 and 142-2, respectively, GPUs 144-1 and 144-2, respectively, and NICs 148-1 and 148-2, respectively, which migrate VM 122-1 from source host 110-1 to destination host 110-2.

Memory 150-1 of hardware platform 140-1 includes a shared portion 152-1 accessible to both CPU 142-1 and GPU 144-1 (and to NIC 148-1, according to some embodiments), and memory 150-2 of hardware platform 140-2 similarly includes a shared portion 152-2 accessible to both CPU 142-2 and GPU 144-2 (and to NIC 148-2, according to some embodiments). Shared portions 152-1 and 152-2 are used for storing vGPU state information that is migrated from source host 110-1 to destination host 110-2. Specifically, at source host 110-1, GPU 144-1 performs DMA operations to store vGPU state information in shared portion 152-1. CPU 142-1 then reads the state information from shared portion 152-1 and transmits the state information to destination host 110-2 using NIC 148-1. For example, based on instructions from CPU 142-1 to read the state information, NIC 148-1 may perform DMA operations to extract the state information from shared portion 152-1 for transmitting to destination host 110-2.

Then, at destination host 110-2, NIC 148-2 receives the state information, and CPU 142-2 stores the transmitted state information in shared portion 152-2. For example, based on instructions from CPU 142-2 to store the transmitted state information, NIC 148-2 may perform DMA operations to store the transmitted state information in shared portion 152-2. GPU 144-2 then performs DMA operations to restore the state information from shared portion 152-2 into GPU 144-2, i.e., to read the state information from shared portion 152-2 and store the state information, e.g., in RAM of GPU 144-2. It should be noted that NICs 148-1 and 148-2 performing DMA operations to directly access shared portions 152-1 and 152-2, respectively, may increase the speed at which vGPU state information is migrated. Such DMA operations avoid unnecessary operations for communicating vGPU state information from CPU 142-1 to NIC 148-1 for transmitting, and from NIC 148-2 to CPU 142-2 for storing.

In the example of Figure 2, shared portions 152-1 and 152-2 include migration buffers 200 and 210, respectively. Migration buffers 200 and 210 are objects that each stores a plurality of memory pages to be transferred during a migration of a VM. For example, shared portions 152-1 and 152-2 may include finite arrays of migration buffers 200 and 210, respectively, of a fixed size. Accordingly, GPU 144-1 and NIC 148-1 may perform DMA operations based on the sizes of migration buffers 200, and GPU 144-2 and NIC 148-2 may perform DMA operations based on the sizes of migration buffers 210.

The sizes of migration buffers 200 and 210 (and thus of shared portions 152-1 and 152-2) may be predetermined based on a variety of factors. Such factors may include, e.g., capabilities of GPUs 144-1 and 144-2 for saving and restoring vGPU state information. Such factors may also include, e.g., capabilities of network 102 for transmitting state information from source host 110-1 to destination host 110-2. Such sizes may be scaled up to increase the speed of migrating vGPU state information when GPUs 144-1 and 144-2 are able to support increased speeds for saving and restoring and when network 102 is able to support a greater throughput for transmitting such state information.

Software 120-1 includes a hypervisor 126-1, which supports VM 122-1 before migration. Hypervisor 126-1 includes a migrate module 128-1, which executes on CPU 142-1 to perform migration-related operations of source host 110-1. Before migration, hypervisor 126-1 includes a vGPU 130-1 corresponding to VM 122-1, including vGPU state information. Hypervisor 126-1 provisions vGPU 130-1 from GPU 144-1, i.e., configures GPU 144-1 to be shared by VMs 122 using vGPUs such as vGPU 130-1. Hypervisor 126-1 may also include other vGPUs 130 corresponding to VM 122-1 (not shown). Software 120-1 also includes a GPU driver 132-1, which provides a software interface to GPU 144-1.

Software 120-2 includes a hypervisor 126-2, which supports VM 122-1 after migration. It should be understood that VM 122-1 on destination host 110-2 is not technically the same VM as VM 122-1 on source host 110-1. VM 122-1 on destination host 110-2 may be understood as a copy resulting from migrating VM 122-1 from source host 110-1, but will be referred to herein as being the same VM for simplicity (with the same reference label). Hypervisor 126-2 includes a migrate module 128-2, which executes on CPU 142-2 to perform migration-related operations of destination host 110-2. After migration, hypervisor 126-2 also includes vGPU 130-1.

Similar to VM 122-1, vGPU 130-1 on destination host 110-2 is not technically the same vGPU as vGPU 130-1 on source host 110-1. VGPU 130-1 on destination host 110-2 may be understood as a copy resulting from migrating vGPU 130-1 from source host 110-1, but will be referred to herein as being the same vGPU for simplicity (with the same reference label). Hypervisor 126-2 provisions vGPU 130-1 from GPU 144-2. After migration, hypervisor 126-2 may also include other vGPUs 130 corresponding to VM 122-1 (not shown). Software 120-2 also includes a GPU driver 132-2, which provides a software interface to GPU 144-2. For example, figures below will be discussed with respect to source host 110-1 and destination host 110-2.

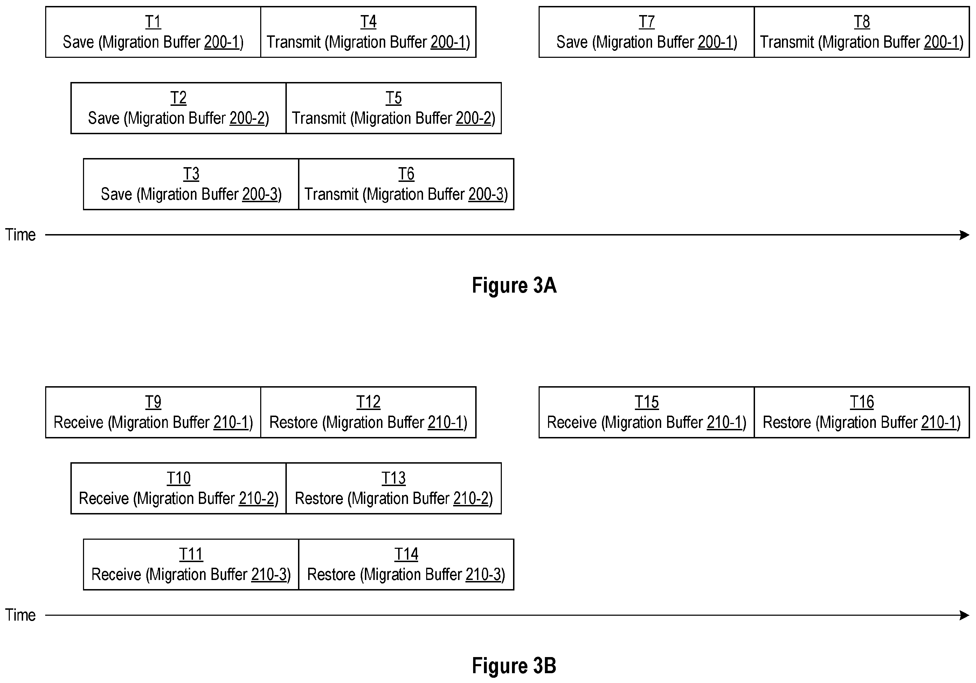

Figure 3A is a timeline diagram illustrating an example of transmitting state information of vGPU 130-1 from source host 110-1 to destination host 110-2, according to embodiments. CPU 142-1 and GPU 144-1 of source host 110-1 will be referred to hereinafter as a "source CPU" and "source GPU," respectively. At a time 1 (T1), the source GPU performs a DMA operation to save vGPU state information of vGPU 130-1 to a migration buffer 200-1. Then, at T2 and T3, the source GPU performs DMA operations to save additional vGPU state information of vGPU 130-1 to migration buffers 200-2 and 200-3, respectively.

At T4, the source CPU extracts the vGPU state information from migration buffer 200-1 and transmits the state information to destination host 110-2. Then, at T5 and T6, the source CPU extracts the vGPU state information from migration buffers 200-2 and 200-3, respectively, and transmits the state information to destination host 110-2. It should be noted that because there are multiple of migration buffers 200 in shared portion 152-1, operations involving migration buffers 200-1, 200-2, and 200-3 may be performed in parallel. Accordingly, for example, the operation at T2 may be performed before the operation at T4, and the operation at T3 may be performed before the operation at T5. Such parallel operation may save time in transferring the vGPU state information.

At T7, the source GPU performs another DMA operation to save additional vGPU state information of vGPU 130-1 to migration buffer 200-1. Then, at T8, the source CPU extracts the vGPU state information from migration buffer 200-1 and transmits the state information to destination host 110-2. The source CPU and GPU perform such sequences of "save" and "transmit" operations to transmit all the vGPU state information to destination host 110-2. It should be noted that the source GPU does not reuse migration buffer 200-1 at T7 for storing additional vGPU state information until after the operation at T4. Additionally, there may be any number of migration buffers 200, and such number is not limited to 3. It should also be noted that it may require more or less iterations of "save" and "transmit" operations than the 4 illustrated in Figure 3A, for transmitting all the vGPU state information.

Figure 3B is a timeline diagram illustrating an example of restoring state information for vGPU 130-1 at destination host 110-2, according to embodiments. CPU 142-2 and GPU 144-2 of destination host 110-2 will be referred to hereinafter as a "destination CPU" and "destination GPU," respectively. At T9, the destination CPU receives vGPU state information from source host 110-1 and stores the state information in a migration buffer 210-1. Then, at T10 and T11, the destination CPU receives additional vGPU state information from source host 110 and stores the state information in migration buffers 210-2 and 210-3, respectively.

At T12, the destination GPU performs a DMA operation to restore the vGPU state information from migration buffer 210-1 into the destination GPU. Then, at T13 and T14, the destination GPU performs additional DMA operations to restore the vGPU state information from migration buffers 210-2 and 210-3, respectively, into the destination GPU. It should be noted that because there are multiple of migration buffers 210 in shared portion 152-2, operations involving migration buffers 210-1, 210-2, and 210-3 may be performed in parallel. Accordingly, for example, the operation at T10 may be performed before the operation at T12, and the operation at T11 may be performed before the operation at T13. Such parallel operation may save time in receiving and restoring the vGPU state information.

At T15, the destination CPU receives additional vGPU state information from source host 110-1 and stores the state information in migration buffer 210-1. Then, at T16, the destination GPU performs an additional DMA operation to restore the vGPU state information from migration buffer 210-1. The destination CPU and GPU perform such sequences of "receive" and "restore" operations to restore all the vGPU state information received from source host 110-1 into the destination GPU. It should be noted that the destination CPU does not reuse migration buffer 210-1 at T15 for storing additional vGPU state information until after the operation at T12. Additionally, there may be any number of migration buffers 210, and such number is not limited to 3. It should also be noted that it may require more or less iterations of "receive" and "restore" operations than the 4 illustrated in Figure 3B, for restoring all the vGPU state information.

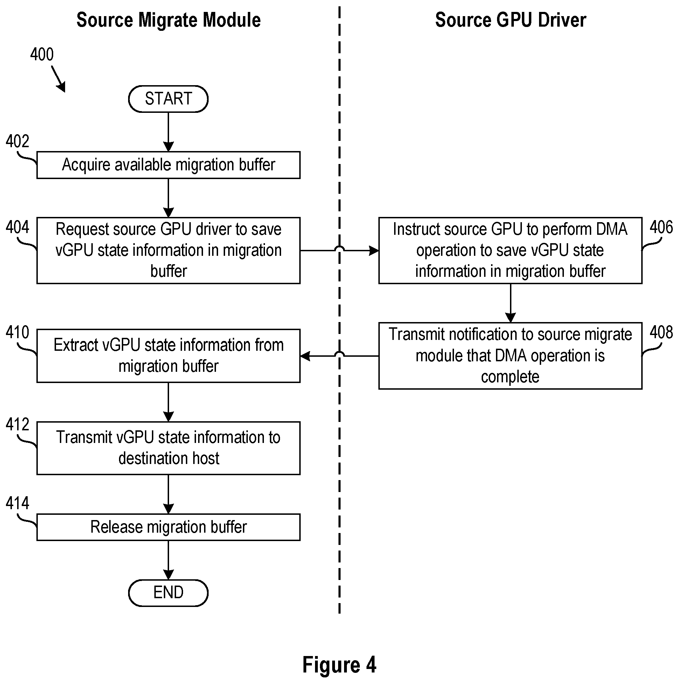

Figure 4 is a flow diagram of a method 400 that may be performed by source host 110-1 to transmit state information of vGPU 130-1 to destination host 110-2, according to some embodiments. Migrate module 128-1 and GPU driver 132-1 of source host 110-1 will be referred to hereinafter as a "source migrate module" and "source GPU driver," respectively. At step 402, the source migrate module acquires an available one of migration buffers 200. For example, the source migrate module may scan lock information in memory 150-1 associated with each of migration buffers 200 to determine if any of them are indicated by the lock information as being unlocked (available). As used herein, the lock information is data or metadata allowing for synchronizing access to resources such as migration buffers 200, and various implementations of such lock information are contemplated, including, e.g., binary semaphores. Once one of migration buffers 200 is indicated as unlocked, the source migrate module may update the associated lock information to indicate that the associated one of migration buffers 200 is now locked for transmitting state information of vGPU 130-1.

At step 404, the source migrate module requests the source GPU driver to save vGPU state information in the acquired one of migration buffers 200. At step 406, the source GPU driver instructs the source GPU to perform a DMA operation to save vGPU state information in the acquired one of migration buffers 200. In response, the source GPU performs the DMA operation as instructed to save vGPU state information (an amount that fits in the acquired one of migration buffers 200). At step 408, after the source GPU has completed the DMA operation, the source GPU driver transmits a notification to the source migrate module that the DMA operation is complete.

At step 410, the source migrate module extracts the vGPU state information from the acquired one of migration buffers 200. For example, based on instructions from the source migrate module to read the state information, NIC 148-1 may perform a DMA operation to extract the state information from the acquired one of migration buffers 200. At step 412, the source migrate module transmits the vGPU state information to destination host 110-2 using NIC 148-1. Source host 110-1 may use multi-threading to transmit different portions of the vGPU state information over network 102 in parallel using a plurality of threads. As used herein, a "thread" is a sequence of instructions that may be performed independently of any other instructions.

At step 414, the source migrate module releases the acquired one of migration buffers 200, e.g., by updating the lock information associated therewith to indicate that it is now unlocked. After step 414, method 400 ends. Source host 110-1 may perform method 400 repeatedly to transmit all the state information of vGPU 130-1 to destination host 110-2. Additionally, source host 110-1 may perform method 400 both during a pre-copying phase of migrating VM 122-1 and during a stop-and-copy phase, as discussed further below. It should also be noted that steps of method 400 may be performed for multiple vGPUs 130 if VM 122-1 corresponds to multiple vGPUs 130.

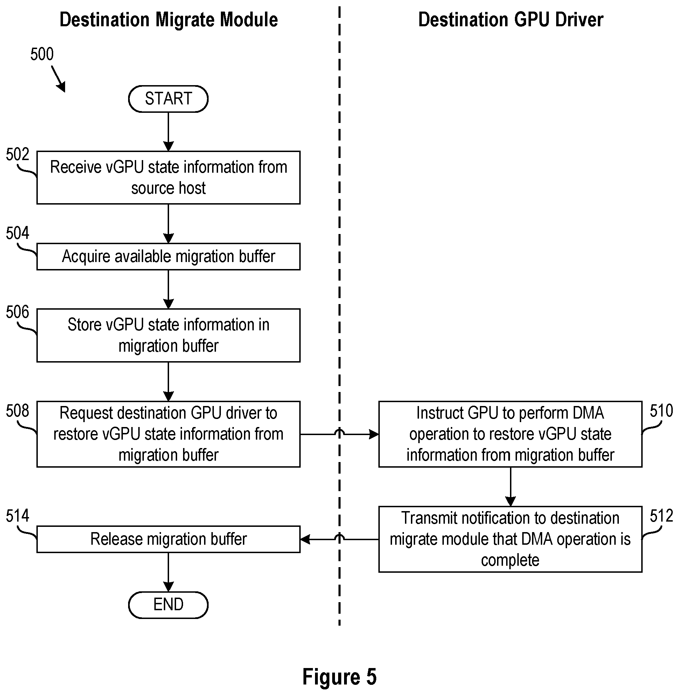

Figure 5 is a flow diagram of a method 500 that may be performed by destination host 110-2 to restore state information of vGPU 130-1 into the destination GPU, according to some embodiments. Migrate module 128-2 and GPU driver 132-2 of destination host 110-2 will be referred to hereinafter as a "destination migrate module" and "destination GPU driver," respectively. At step 502, the destination migrate module receives state information of vGPU 130-1 from source host 110-1 using NIC 148-2. In the example described herein, the received vGPU state information is the size of one of migration buffers 210.

At step 504, the destination migrate module acquires an available one of migration buffers 210. For example, the destination migrate module may scan lock information in memory 150-2 associated with each of migration buffers 210 to determine if any of them are indicated by the lock information as being unlocked. Once one of migration buffers 210 is indicated as unlocked, the destination migrate module may update the associated lock information to indicate that it is now locked for restoring state information of vGPU 130-1. At step 506, the destination migrate module stores the received vGPU state information in the acquired one of migration buffers 210. For example, based on instructions from the destination migrate module to store the state information, NIC 148-2 may perform a DMA operation to store the state information in the acquired one of migration buffers 210.

At step 508, the destination migrate module requests the destination GPU driver to restore the vGPU state information from the acquired one of migration buffers 210. At step 510, the destination GPU driver instructs the destination GPU to perform a DMA operation to restore the vGPU state information from the acquired one of migration buffers 210. In response, the destination GPU performs the DMA operation as instructed to restore the vGPU state information, which results in the vGPU state information being stored in the destination GPU, e.g., in RAM thereof. At step 512, after the destination GPU has completed the DMA operation, the destination GPU driver transmits a notification to the destination migrate module that the DMA operation is complete.

At step 514, the destination migrate module releases the acquired one of migration buffers 510, e.g., by updating the lock information associated therewith to indicate that it is now unlocked. After step 514, method 500 ends. Destination host 110-2 may perform method 500 repeatedly to restore all the state information of vGPU 130-1 received from source host 110-1 into the destination GPU. Additionally, destination host 110-2 may perform method 500 both during a pre-copying phase of migrating VM 122-1 and during a stop-and-copy phase, as discussed further below. It should also be noted that steps of method 500 may be performed for multiple vGPUs 130 if VM 122-1 corresponds to multiple vGPUs 130.

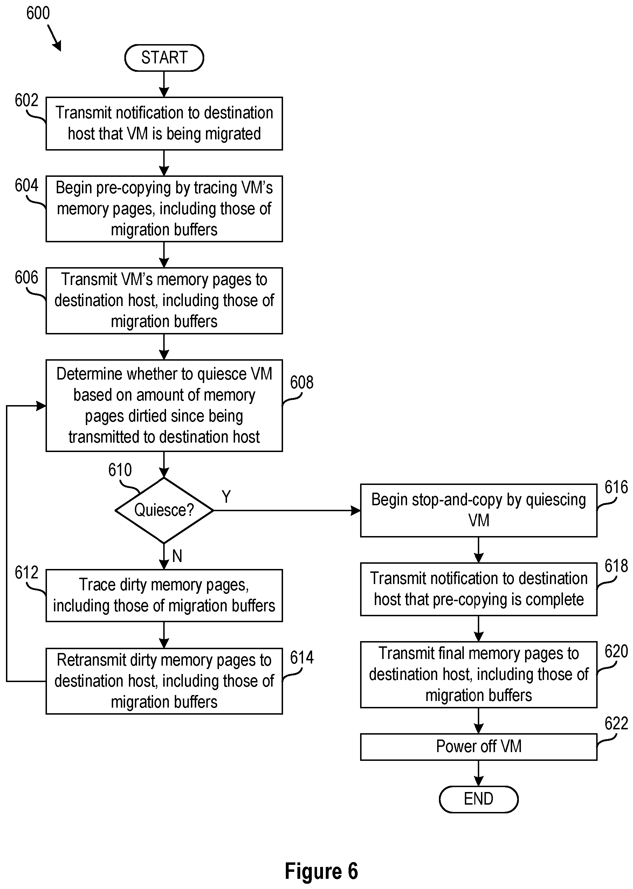

Figure 6 is a flow diagram of a method 600 that may be performed by the source migrate module of source host 110-1 to migrate VM 122-1 to destination host 110-2, including transmitting state information of vGPU 130-1 thereto, according to some embodiments. Method 600 is an example of migrating VM 122-1 live. At step 602, the source migrate module transmits a notification to destination host 110-2 that VM 122-1 is being migrated. At step 604, the source migrate module begins a "pre-copying phase," which spans steps 604-614.

During the pre-copying phase, VM 122-1 continues executing at source host 110-1. Accordingly, VM 122-1 can modify memory pages that have already been copied to destination host 110-2. To account for such modification, the source migrate module begins tracking memory pages of VM 122-1 in memory 150-1. Such memory pages include those of migration buffers 200 to which state information of vGPU 130-1 (and of other corresponding vGPUs 130 if VM 122-1 has multiple) has been stored according to one or more iterations of method 400 of Figure 4.

The above tracking allows the source migrate module to determine which memory pages are modified between iterations of pre-copying. Such modified memory pages are referred to as "dirty" memory pages. As just one example of the tracking, the source migrate module may install "write traces" on all the memory pages of VM 122-1 to track which memory pages are subsequently dirtied. The installation of write traces is further described in U.S. Patent No. 11,995,459, issued May 28, 2024, the entire contents of which are incorporated herein by reference. According to such example, when VM 122-1 writes to a "traced" memory page, the source migrate module is notified, which is referred to as a "trace fire."

At step 606, the source migrate module transmits all the memory pages of VM 122-1 to destination host 110-2, including those of migration buffers 200. Source host 110-1 may use multi-threading to transmit the memory pages over network 102, including for transmitting the vGPU state information, as discussed above. At step 608, the source migrate module determines whether to quiesce VM 122-1 based on an amount of memory pages that have been dirtied since being transmitted to destination host 110-2. For example, the source migrate module may determine the amount of dirty memory pages based on how many trace fires occurred since the last time write traces were installed (since step 604 or step 612). For example, the source migrate module may compare the amount of time it would take to retransmit the dirty memory pages, to a predetermined threshold. Such amount of time depends on both the total size of the dirty memory pages and the transmission bandwidth between source and destination hosts 110-1 and 110-2.

At step 610, if the source migrate module determines not to quiesce VM 122-1 yet, method 600 moves to step 612. At step 612, according to the example of using write traces, the source migrate module re-installs write traces on the dirty memory pages of VM 122-1, including those of migration buffers 200. Migration buffers 200 may include vGPU state information that has been modified by the source GPU and stored in migration buffers 200 according to one or more iterations of method 400 of Figure 4. The source migrate module does not re-install write traces on the other memory pages of VM 122-1 that are not dirty.

At step 614, the source migrate module retransmits the dirty memory pages of VM 122-1 to destination host 110-2, including those of migration buffers 200. Returning to step 610, once the source migrate module determines to quiesce VM 122-1, method 600 moves to step 616. At step 616, the source migrate module ends the pre-copying phase and begins a "stop-and-copy phase," which spans steps 616-622. At the beginning of the stop-and-copy phase, the source migrate module quiesces the VM to halt its execution.

At step 618, the source migrate module transmits a notification to destination host 110-2 indicating that pre-copying is complete. At step 620, the source migrate module transmits any remaining memory pages of VM 122-1 to destination host 110-2. This includes those of migration buffers 200 if the source GPU modified any vGPU state information sinch such state information was last transmitted to destination host 110-2. At step 622, the source migrate module powers off VM 122-1 at source host 110-1, and method 600 ends.

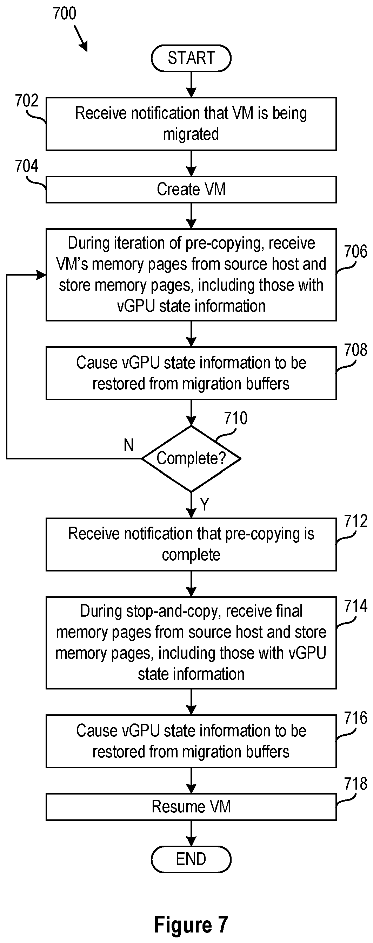

Figure 7 is a flow diagram of a method 700 that may be performed by the destination migrate module of destination host 110-2 to migrate VM 122-1 from source host 110-1, including restoring state information for vGPU 130-1 into the destination GPU, according to some embodiments. Method 700 is an example of migrating VM 122-1 live. At step 702, the destination migrate module receives a notification from source host 110-1 that VM 122-1 is being migrated. At step 704, the destination migrate module creates a VM at destination host 110-2, which is also referred to herein as VM 122-1, as mentioned earlier.

At step 706, during a first iteration of pre-copying, the destination migrate module receives each memory page of VM 122-1 (at source host 110-1) from source host 110-1 and stores the memory pages in memory 150-2. Such memory pages include those with state information of vGPU 130-1 (and of other corresponding vGPUs 130 if VM 122-1 has multiple) from migration buffers 200. The destination migrate module stores the received vGPU state information in migration buffers 210. At step 708, the destination migrate module causes the vGPU state information to be restored from migration buffers 210 into the destination GPU. The storing of vGPU state information of step 706 and the restoring of vGPU state information of step 708 may be performed according to one or more iterations of method 500 of Figure 5.

At step 710, if the pre-copying phase is not yet complete, method 700 returns to step 706. Steps 706 and 708 are repeated for dirty memory pages of VM 122-1 (at source host 110-1) received from source host 110-1, including for updated state information of vGPU 130-1 (and of other corresponding vGPUs 130 if VM 122-1 has multiple) received from source host 110-1. Once restored, such updated vGPU state information may replace stale vGPU state information in the destination GPU. Returning to step 710, once the pre-copying phase is complete, method 700 moves to step 712.

At step 712, the destination migrate module receives a notification from source host 110-1 that pre-copying has completed. At step 714, during a stop-and-copy phase, the destination migrate module receives any remaining memory pages of VM 122-1 (at source host 110-1) from source host 110-1 and stores the memory pages in memory 150-2. Such memory pages include those with vGPU state information from migration buffers 200 if any remaining vGPU state information was modified since being transmitted to destination host 110. The destination migrate module stores such vGPU state information in migration buffers 210.

At step 716, if additional vGPU state information was stored at step 714, the destination migrate module causes any remaining vGPU state information to be restored from migration buffers 210 into the destination GPU. The storing of vGPU state information of step 714 and the restoring of vGPU state information of step 716 may be performed according to one or more iterations of method 500 of Figure 5. At step 718, the destination migrate module resumes VM 122-1 at destination host 110-2, which causes VM 122-1 to execute at destination host 110-2. After step 718, method 700 ends.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, SSDs, network-attached storage (NAS) systems, RAM, read-only memory (ROM), compact disks (CDs), digital versatile disks (DVDs), and other optical and non-optical data storage devices. A computer-readable medium can also be distributed over a network-coupled computer system so that computer-readable code is stored and executed in a distributed fashion.

Virtualized systems in accordance with the various embodiments may be implemented as hosted embodiments, non-hosted embodiments, or as embodiments that blur distinctions between the two. Furthermore, various virtualization operations may be wholly or partially implemented in hardware. For example, a hardware implementation may employ a look-up table for modification of storage access requests to secure non-disk data. Many variations, additions, and improvements are possible, regardless of the degree of virtualization. The virtualization software can therefore include components of a host, console, or guest OS that perform virtualization functions.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

## Claims

1. A source host computer including a central processing unit (CPU), an accelerator, and memory, wherein the source host computer migrates a virtual machine (VM) that uses the accelerator to a destination host computer by performing the following steps:
requesting a driver of the accelerator to save first state information associated with the VM in a first migration buffer of the memory that is accessible to both the CPU and the accelerator, wherein the accelerator then performs a direct memory access (DMA) operation to save the first state information in the first migration buffer;
extracting, using the CPU, the first state information from the first migration buffer; and
transmitting the extracted first state information to the destination host computer.

2. The source host computer according to claim **1,** wherein the steps further include:
requesting the driver to save second state information associated with the VM in a second migration buffer of the memory that is accessible to both the CPU and the accelerator, wherein the accelerator then performs another DMA operation to save the second state information in the second migration buffer;
extracting, using the CPU, the second state information from the second migration buffer; and
transmitting the extracted second state information to the destination host computer, in particular wherein the steps further include:
requesting the driver to save the second state information in the second migration buffer before transmitting the extracted first state information to the destination host computer.

3. The source host computer according to claim 1 or claim 2, wherein the steps further include:
determining, after transmitting the extracted first state information to the destination host computer, to quiesce the VM based on an amount of memory pages in the memory that have been updated at the source host computer since being transmitted from the source host computer to the destination host computer; and
quiescing the VM to halt execution of the VM, in particular wherein the steps further include performing the following after quiescing the VM:
requesting the driver to save second state information associated with the VM in the first migration buffer, wherein the accelerator then performs another DMA operation to save the second state information in the first migration buffer;
extracting, using the CPU, the second state information from the first migration buffer; and
transmitting the extracted second state information to the destination host computer.

4. The source host computer according to one of claims 1 to 3, wherein the steps further include:
transmitting the first state information to the destination host computer using multiple threads that transfer different portions of the first state information in parallel.

5. The source host computer according to one of claims 1 to 4, further including a network interface controller (NIC), wherein the steps further include:
instructing the NIC to read the first state information, wherein the NIC then performs a DMA operation to extract the first state information from the first migration buffer for transmitting to the destination host computer.

6. A method of migrating a virtual machine (VM) from a source host computer to a destination host computer, wherein the source host computer includes a central processing unit (CPU), an accelerator, and memory, the method comprising:
requesting a driver of the accelerator to save first state information associated with the VM in a first migration buffer of the memory that is accessible to both the CPU and the accelerator, wherein the accelerator then performs a direct memory access (DMA) operation to save the first state information in the first migration buffer;
extracting, using the CPU, the first state information from the first migration buffer; and
transmitting the extracted first state information to the destination host computer.

7. The method according to claim 6, further comprising:
requesting the driver to save second state information associated with the VM in a second migration buffer of the memory that is accessible to both the CPU and the accelerator, wherein the accelerator then performs another DMA operation to save the second state information in the second migration buffer;
extracting, using the CPU, the second state information from the second migration buffer; and
transmitting the extracted second state information to the destination host computer, in particular further comprising:
requesting the driver to save the second state information in the second migration buffer before transmitting the extracted first state information to the destination host computer.

8. The method according to claim 6 or claim 7, further comprising:
determining, after transmitting the extracted first state information to the destination host computer, to quiesce the VM based on an amount of memory pages in the memory that have been updated at the source host computer since being transmitted from the source host computer to the destination host computer; and
quiescing the VM to halt execution of the VM, in particular further comprising performing the following after quiescing the VM:
requesting the driver to save second state information associated with the VM in the first migration buffer, wherein the accelerator then performs another DMA operation to save the second state information in the first migration buffer;
extracting, using the CPU, the second state information from the first migration buffer; and
transmitting the extracted second state information to the destination host computer.

9. The method according to one of claims 6 to 8, further comprising:
transmitting the first state information to the destination host computer using multiple threads that transfer different portions of the first state information in parallel.

10. The method according to one of claims 6 to 9, further comprising:
acquiring the first migration buffer by updating lock information associated with the first migration buffer to indicate that the first migration buffer is locked; and
releasing the first migration buffer by updating the lock information to indicate that the first migration buffer is unlocked.

11. A non-transitory, computer-readable medium comprising instructions that are executable in a source host computer that includes a central processing unit (CPU), an accelerator, and memory, wherein the instructions when executed cause the source host computer to carry out a method of migrating a virtual machine (VM) that uses the accelerator from the source host computer to a destination host computer, and wherein the method comprises:
requesting a driver of the accelerator to save first state information associated with the VM in a first migration buffer of the memory that is accessible to both the CPU and the accelerator, wherein the accelerator then performs a direct memory access (DMA) operation to save the first state information in the first migration buffer;
extracting, using the CPU, the first state information from the first migration buffer; and
transmitting the extracted first state information to the destination host computer.

12. The non-transitory, computer-readable medium according to claim **11,** wherein the method further comprises:
requesting the driver to save second state information associated with the VM in a second migration buffer of the memory that is accessible to both the CPU and the accelerator, wherein the accelerator then performs another DMA operation to save the second state information in the second migration buffer;
extracting, using the CPU, the second state information from the second migration buffer; and
transmitting the extracted second state information to the destination host computer, in particular wherein the method further comprises:
requesting the driver to save the second state information in the second migration buffer before transmitting the extracted first state information to the destination host computer.

13. The non-transitory, computer-readable medium according to claim **11** or claim 12, wherein the method further comprises:
determining, after transmitting the extracted first state information to the destination host computer, to quiesce the VM based on an amount of memory pages in the memory that have been updated at the source host computer since being transmitted from the source host computer to the destination host computer; and
quiescing the VM to halt execution of the VM.

14. The non-transitory, computer-readable medium according to claim 13, wherein the method further comprises performing the following after quiescing the VM:
requesting the driver to save second state information associated with the VM in the first migration buffer, wherein the accelerator then performs another DMA operation to save the second state information in the first migration buffer;
extracting, using the CPU, the second state information from the first migration buffer; and
transmitting the extracted second state information to the destination host computer.

15. The non-transitory, computer-readable medium according to one of claims 11 to 14, wherein the method further comprises:
transmitting the first state information to the destination host computer using multiple threads that transfer different portions of the first state information in parallel.
